# EUROPEAN PATENT APPLICATION

(11) **EP 2 500 157 A1**
(43) Date of publication of application: **19.09.2012**
(21) Application number: 11305311.0
(22) Date of filing: 18.03.2011
(51) Int. Cl.: B29C 45/14, B65D 35/14

(54) **Pre-formed tube end piece**

(71) Applicant: Albéa Services, 92230 Gennevilliers (FR)
(72) Inventor: Kerman, Eric, 51000 Châlon en Champagne (FR); Thorne, Nicholas, 38180 Seyssins (FR); Maurice, Thierry, 51000 Châlon en Champagne (FR)
(74) Representative: Callon de Lamarck, Jean-Robert

(57) **Abstract**

The invention relates to a method for forming a preformed end piece for use in the manufacture of a container, wherein the end piece has an inlet and an outlet and an intermediate portion extending from the inlet to the outlet,
wherein the outlet is narrower than the inlet, and wherein the inlet has a surface for the attachment of a container wall,
the method comprising:
a) providing in a mould an annular insert comprising a layer of metal foil;
b) injecting a polymeric material into the mould and onto the annular insert to form the end piece, whereby the annular insert extends across the intermediate portion.

## Description

The present invention relates to the field of dispensing containers, and in particular, dispensing tubes such as for hair dye. More specifically, the present invention relates to a pre-formed tube end piece, or head, suitable for containers able to store conventionally "hard-to-hold" chemical compositions, such as hair dye.

Aluminium barrier laminates (ABL) are well known for use in forming tubes and containers suitable for holding many products, such as toothpaste, foodstuffs, creams and various skincare and cosmetic formulations. Some products, however, can be corrosive. As a consequence, aluminium barrier layers are used to provide excellent barrier properties, but these layers need to be protected from the product. Permanent hair dye formulations are an example of a corrosive product and need to be stored in aluminium tubes having a reinforced inner protective lacquer coating.

When forming a tube from such a laminate, it is necessary to provide an end piece for dispensing the product from the tube. The end piece can also be referred to as the "head" of the tube. Thus, the tube comprises a head and the laminate (or "skirt"). The head can comprise a neck (for the attachment of a lid) and a shoulder. This end piece will normally be provided with a lid or cap and this can be an additional component or formed integrally as part of the end piece. The shoulder section is often more rigid that the body (or "skirt") of the tube to ensure that the outlet is not crushed closed before all of the tube contents have been dispensed.

Commonly tube end pieces (or "heads") are formed by injection moulding due to the shaping requirements for forming a useful end piece. However, due to the requirements and structure of the shoulder it has been difficult to provide a shoulder having the same barrier properties as the tube laminated walls as required for hard-to-hold chemical compositions. Thus, it is common for the tube end pieces to be formed from only polyethylene and this is not suitable for holding products such as hair dye.

To obtain a satisfactory tube that can store aggressive products it is essential to satisfy two key requirements, namely, that the product (1) does not leak out of the container prior to use by the consumer and (2) does not otherwise have contact with the atmosphere before use. Hair dye, for example, is highly air-sensitive and corrosive (often having a pH of around 12). If hair dye is left exposed to air then it oxidises to a dark black and is both unsightly to consumers and, above all, ceases to work optimally. It is, therefore, essential that the tube skirt and the end piece satisfy these requirements.

With just these limitations in mind, it would be possible to design a robust end piece component for containers for such products. However, due to the relatively low value of the contents and the disposable nature of the containers, it is essential that the containers do not require costly materials or complicated manufacture processes. Indeed, for single-use containers, there is a particular desire to minimise the use of any unnecessary packaging materials or cost.

Accordingly, it is an object of the invention to provide a method for forming a tube or container end piece that once assembled into a container by the attachment of a skirt will provide a sufficient chemical resistance to enable it to be used for hard-to-hold products such as hair dye. Furthermore, there is a desire for a tube end piece and containers comprising the tube end piece that will overcome, or at least mitigate, some or all of the problems associated with the prior art or at least provide a useful or optimized alternative.

In a first aspect, the present invention provides a method for forming a preformed end piece for use in the manufacture of a container, wherein the end piece has an inlet and an outlet and an intermediate portion extending from the inlet to the outlet,
wherein the outlet is narrower than the inlet, and wherein the inlet has a surface for the attachment of a container wall,
the method comprising:
a) providing in a mould an annular insert comprising a layer of metal foil;
b) injecting a polymeric material into the mould and onto the annular insert to form the end piece, whereby the annular insert extends across the intermediate portion.

The present invention will now be described further. In the following passages different aspects/embodiments of the invention are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous.

As used herein, the terms "over", "outer", "inner" and "under", and the like, used with respect to the various layers refer to the barrier insert with the intended outer surface uppermost and the intended inner (product-contacting) surface lowermost. In addition, these terms and the term "on" does not imply that the layers are necessarily directly in contact. For example, an inner layer being "formed on" a metal foil barrier layer does not preclude the presence of one or more other intervening layers located between the inner layer and the metal foil barrier layer or further layers provided under the inner layer (i.e. between the inner layer and the product).

The term "container" is used herein to refer to an item which may contain a product. Such products are usually liquids, gels or pastes. Preferred containers include tubes and pouches. The container may further comprise a lid and, if necessary, attachment means for the lid before it forms a useful commercial container. Such components are well known in the art. However, the term is used herein to refer to the body of the container that contains and contacts the commercial product. Preferably the container is for holding hair dye.

The term "flexible" as used herein describes the container which can bend or be bent easily and which does not break (unless it is bent too much). Herein in connection with the containers the term flexible indicates that if the container is subjected to a force, for example, by being filled with a liquid, or by applying pressure with a finger or a hand, it will change its form without breaking. A flexible container can also be considered to be a "squeezable" container. Preferably all of the containers disclosed herein are flexible containers to aid dispensing of a product.

The tubes of the present invention are especially suitable for holding "hard-to-hold" or "aggressive" compositions. These included hair colorants (or hair dyes), are chemically reactive and generally contain one or more acidic, basic, and/or oxidizing ingredients. These ingredients often fall within the chemical classes of inorganic hydroxides, inorganic halides, and peroxides. Inorganic hydroxides include ammonium hydroxide as well as alkali and alkaline earth metal hydroxides (e.g., potassium hydroxide and calcium hydroxide). Inorganic halides include fluorides, chlorides, bromides, and iodides of ammonium and metals such as transition metals, alkali metals, and alkaline earth metals. Aluminium chloride, potassium chloride, and ammonium fluoride are specific examples. Peroxides include hydrogen peroxide, urea peroxide (carbamide), and alkali and alkaline earth metal peroxides (e.g., sodium peroxide). Representative aggressive products have pH values of less than about 4 (e.g., in the range from about 1 to about 4, or from about 1 to about 3) or otherwise pH values of greater than about 9 (e.g., in the range from about 10 to about 13, or from about 10 to about 12), and often greater than about 11 (e.g., in the range from about 11 to about 14).

The end piece of the present invention may be synonymous with the terms "head" or "tube head" of a container. These terms may be used interchangeably in the present application. The end piece forms the dispensing portion of the container.

The end piece of the present invention is "preformed". That is, it is formed in a separate step from the step in which the tube is formed. Particularly, the step of the formation of the end piece by injection of plastic material is distinct from the step of the attachment of the end piece to the tube skirt. In other words, when the material is injected into the mould in order to form the end piece, the mould does not contain the skirt. The attachment between the skirt and the end piece for forming the container is realized with a different step which is done after the formation step was completely finished. Thus, the preformed end piece has a portion for the attachment of the tube skirt (or laminate web) in order to form a finished tube. Thus, to form a finished tube, the skirt is simply heat-sealed or otherwise attached to the preformed end piece.

The end piece of a tube is a traditional weak point since it conventionally relies solely on the thickness of the polymer material (usually polyethylene (PE)) used for its manufacture to act as a barrier. The thickness is typically around 1 - 1.5mm which provides some barrier performance, but this is very limited compared to the foil-containing material of an ABL sleeve.

The present invention relates to a method for forming an end piece for the manufacture of a container, in particular a preformed end piece. The end piece is particularly suitable for use in a tube or container for holding hard-to-hold products. Preformed end pieces are known in the art. Such end pieces are formed as a single piece and subsequently attached to the walls of the skirt to form a finished container. The formation of an end piece and the subsequent joining of the end piece to the container skirt allows for mass-production of the end piece and construction/filling of containers in locations without access to the complex direct injection apparatus. This allows for simplified and cost effective manufacturing processes.

By contrast, some techniques known in the art may involve the direct injection-forming of an end piece onto the walls of a skirt. In that case, the formation step of the end piece and the attachment step between the end piece and the skirt are realized on the same time. Direct injection has several advantages, although the complexity of the tooling required to form tubes is significantly increased.

The direct injection technique involves the injection of the polymeric material that forms the end piece into a mould having a sprue section over the dispensing end of the tube. This sprue is cut away before the tube is finished. The sprue is required to ensure that the polymeric material is provided along the symmetry axis of the end piece to ensure even distribution of the material. This is crucial to ensure that the end piece is accurately joined to the walls of the skirt and, additionally, it allows for some simplification in the tooling required.

However, the present inventors have discovered that when removing the sprue it is impossible to ensure that the cut-face of the tube head is consistently flat. That is, the sprue is cut from the moulded end piece to form the mouth of the tube head. However, the cutting blade does not always cut precisely enough to ensure an even, level or smooth cut. If the cut is not level then the end of the tube head may be oval in profile.

For "hard-to-hold" products it is especially desirable that the mouth of the tube head is reliably flat and has a geometrically well defined surface. This aids the provision of a pealable cover on the tube head, such as an aluminium or a laminated aluminium removable protective layer that is removed before use. If the mouth of the tube head is rough then the pealable cover may not adhere reliably. If the mouth of the tube is unintentionally oval then the pealable cover may not extend sufficiently across the mouth of the tube head. The use of a method as described herein therefore allows for the provision of a uniform tube head mouth that the inventors have discovered is especially suitable for hard-to-hold products. For the avoidance of doubt, preferably the present method does involve a cutting step of removing material from the mouth of the tube head; the tube mouth head is formed having a flat and smooth profile directly by the injection process.

Various attempts have been made to improve the ability of the conventional tube end piece itself to resist oxygen and water ingress into the tube and to allow "hard-to-hold" components to be stored therein. These attempts have included:
(i) improving the head-forming material. i.e. using of polymer material having improved barrier performance over PE, for example, a PE with nano clay-type particles;
(ii) forming the end piece from multilayer structures of injectable polymers, such as PE/ EVOH, PE/PET, PE/PEBT. This can be a single step, or sequential step formation. An example of this technique is shown in US6464921;
(iii) forming two separate and joinable components from polymer materials;
(iv) by heat sealing an aluminium foil layer (or laminated material comprising aluminium foil) to the outside of a preformed end piece; or
(v) by heat sealing an aluminium foil layer (or laminated material comprising aluminium foil) to the interior surface of a preformed end piece.

None of these techniques has been ideal for holding hard-to-hold compositions such as hair dye. Either the barrier properties are insufficient or the construction techniques have favoured delamination under the harsh conditions.

The present inventors have determined that the above-described attempt (v) leads to significant delamination because the ends of the aluminium foil layer are exposed to the product. They have further discovered that by over-moulding a barrier insert to form the end piece, these ends are protected and the product is significantly more reliable for use with "hard-to-hold" products.

Specifically, the present inventors have discovered that it is possible to achieve a solution by forming a preformed end piece for use in the manufacture of a container, wherein the end piece has an inlet and an outlet and an intermediate portion extending from the inlet to the outlet,

wherein the outlet is narrower than the inlet, and wherein the inlet has a surface for the attachment of a container wall,
the method comprising:
a) providing in a mould an annular insert comprising a layer of metal foil;
b) injecting a polymeric material into the mould and onto the annular insert to form the end piece, whereby the annular insert extends across the intermediate portion.

The inventors have discovered that over-moulding the barrier insert provides a more robust end piece than simply heat sealing a metal foil or laminated material to the end piece. Specifically, by overmoulding the barrier insert there is provided a layer of protective polymer material over the cut ends of the aluminium. Even though the barrier insert forms a part of the interior surface of the end piece with this over-moulding process (this means that the barrier insert has a portion which is not embedded by the material, this portion forming a part of the interior surface of the end piece), the cut edges or ends of the barrier insert are embedded in the material. Thus, the ends are embedded in the material of the shoulder of the tube head. This has been found to prevent delamination and failure of the end piece. Furthermore, the overmoulded end piece provides an effective barrier in the end piece against any oxygen/product leakage.

The inlet of the end piece is preferably the width of the desired container and the walls of the skirt are attachable to the end piece by overlapping them onto the outer surface of the end piece and heat sealing them thereto.

The outlet of the tube is preferably a nozzle to allow for targeted dispensing of the tube contents. The nozzle may be provided with a screw thread or other means for attaching a cap or lid to the final container.

The intermediate portion substantially forms the end portion of the tube. The intermediate portion is formed by a neck and shoulder and extends from the outlet of the tube head to the inlet of the tube head. That is, apart from the preferably central channel of the neck that passes through the end piece and that allows the dispensing of the product, the intermediate portion covers the end of the tube. Preferably the annular insert extends across all of the shoulder to thereby provide a barrier layer within the shoulder in the intermediate portion that protects all of the end piece, except, not extending across the channel which would prevent dispensing. The insert is within the shoulder of the head and preferably forms a part of the inner surface of the head. That is, the insert is not completely surrounded and encompassed by the injected plastic of the head.

The annular insert is preferably formed from a sheet of metal or metal containing laminate. The sheet can be punched or cut to provide a planar ring of material. For example, if the end piece is from 25 to 35mm across, the planar ring may have an inner diameter of 10mm and an outer diameter of 30mm. Preferably the internal hole is calculated to be adapted to the future orifice of the tube end piece, and the outer diameter is adapted to the diameter of the end piece near the region that is to be assembled with the tube skirt in the future tube-making operation. Thus it is possible and desirable that the metal sheet in the end piece can overlap with the barrier layer present in any wall-forming laminate. The insert is preferably not folded, but may be pressed to provide a conical form as necessary. The fact that the insert is not folded gives the advantage that the metal foil of the insert is not deteriorated and does not loose its barrier effects around the fold. Indeed, when the insert comprises a fold, the metal at the location of the fold is creaked and looses its barrier effects. So, with this invention, the insert is protected by the material of the end piece, especially for the cut edges of the insert without folding the insert.

If it is desired for the end piece to have a sloped profile then this can be achieved by stamping or moulding. Thus, a frustoconical insert can be easily formed. Preferably the annular insert is planar or frustoconical.

Preferably the metal foil is an aluminium or aluminium alloy foil. Preferably the metal foil layer is from 5 to 30 microns, more preferably 6 to 20 microns and more preferably from 10 to 15 microns thick. 9 to 12 is most preferred to avoid wasted material while ensuring a pin-hole free barrier is obtained. This thickness provides a sufficient strength to the end piece. The metal foil and, in particular, aluminium foil is expensive so a minimum suitable thickness of aluminium is employed.

The intermediate portion has an inner surface which, in use, forms part of the internal surface of the container, and an outer surface which, in use, forms part of the external surface of the container. Preferably the injected polymeric material forms the outer surface side of the intermediate portion. This can be achieved by filling the mould from the "outside" of the tube with the insert held on the "inside" of the tube.

The annular insert can contact, in use, product held in the container. As a consequence, the amount of material between the metal barrier layer and the product is strictly controlled and this reduces undesirable scalping. In the absence of a metal barrier layer, there is significant scalping when a wholly polyethylene tube end piece is used. Scalping is a term in the art for the loss of aromas and natural ingredients from a product into the polymeric material forming a container. In the case of hair dye, the scalping effect can take the form of indispensable formulation components present only in trace amounts being absorbed into the polyethylene. Where the barrier insert has an inner polyethylene layer, the use of a thin layer and also the use of the more dense polyethylene layer help to reduce this undesirable loss of product components.

Preferably the annular insert has an inner surface provided with one or more polyethylene layers thereon. Alternative materials include PET or PEBT. Alternatively nylon could be used. While references to PE are used in the following description, it should be appreciated that PET or PEBT layers could also be used interchangeably.

Preferably the inner layer of polyethylene is from 30 to 90 microns thick, more preferably from 30 to 70 microns thick, more preferably from 35 to 60 and most preferably from 35 to 45 microns thick. Thus, the thickness of the laminate from the inner surface to the metal foil barrier layer is minimised. This is advantageous because it helps to reduce "scalping".

Polyethylene compositions for forming layers are well known in the art. In general, polyethylene is a thermoplastic polymer consisting of long chains of polymerised ethylene monomers. Polyethylene is classified into several different categories based mostly on its density and branching. The mechanical properties of polyethylene depend significantly on variables such as the extent and type of branching, the crystal structure and the molecular weight. By way of examples; high density PE (HDPE) is defined by a density of greater or equal to 0.941 g/cm³. HDPE has a low degree of branching and thus stronger intermolecular forces and tensile strength. Medium density PE (MDPE) is defined by a density range of 0.926-0.940 g/cm³. Linear low density polyethylene (LLDPE) is defined by a density range of 0.915-0.925 g/cm³. LLDPE is a substantially linear polymer with significant numbers of short branches, commonly made by copolymerization of ethylene with short-chain alpha-olefins (for example, 1-butene, 1-hexene and 1-octene). Low density polyethylene (LDPE) is defined by a density range of 0.910-0.940 g/cm³. LDPE has a high degree of short and long chain branching, which means that the chains do not pack into the crystal structure as well. This results in a lower tensile strength and increased ductility. Very low density polyethylene (VLDPE) is defined by a density range of 0.880-0.915 g/cm³. Synthetic methods for producing all of these compositions are well known in the art.

Preferably the layer of metal foil of the annular insert is provided sandwiched between two or more polyethylene layers. Preferably the annular insert is symmetrically formed. This aids manufacture since the insert can be used in either orientation.

Preferably the polyethylene layers are each adhered with a tie layer. The term "tie layer" is a layer which is placed between two layers with the object of ensuring that the two layers are joined together. Suitable materials for tie layers are well known in the art. A preferred tie layer material is ethylene acrylic acid (EEA). A preferred tie layer has a thickness of from 20 to 40 microns, more preferably about 30 microns.

Preferably the total thickness of the annular insert is from 200 to 300 µm. This thickness eases positioning and handling for insertion of the insert into the mould cavity, while avoiding the use of excessive material.

Preferably the annular insert is placed into a mould cavity for forming the pre-injected tube shoulder, normally with a mechanism allowing it to be centred so that the inner hole fits symmetrically over the future tube orifice. This can be achieved by mechanical means within the mould cavity by, for example, allowing a small mechanical interference between the future orifice and the inner diameter of the insert, or alternatively by using robotics to centre the insert and then arranging for a holding means such as suction, to hold the insert in the cantered position until injection.

Placing the insert into the mould in this fashion will generally result in the insert being on the inside of the end piece, facing the inside of the future tube. Preferably the insert is placed so as to be inside the overmoulded end piece material and forms a part of the interior surface of the end piece. In this way the cut end pieces of the annular insert are protected from direct contact with the product by some of the injected material.

Preferably the polymeric material used to form the end piece is injected down onto the barrier insert. Thus, the barrier can rest within the mould under gravity and the flow of material is unlikely to disturb or lift the insert during moulding. This has been found to reduce the risk of material being introduced under the barrier insert. As a consequence, the amount of material between the product and the metal foil layer is strictly controlled and undesirable scalping is minimised.

Preferably the outlet of the end piece has an attachment surface for the attachment of a seal for closing the outlet, and the polymeric material is injected into the mould in proximity to, but not on the attachment surface of the outlet of the end piece. The present inventors have discovered that the material for forming the end piece is preferably injected into the mould via an inlet close to the mouth of the tube heard. The inlet of the injection should not contact the upper mouth rim so as to ensure that the final rim is geometrically flat and consistent, allowing for the application of a removable seal, preferably by adhesion or by heat sealing. In one embodiment the end-piece-forming-material inlet is formed on the inside of the end piece, adjacent the outlet of the tube. Preferably the material is injected within 10mm, more preferably from 0.5 to 5 mm and most preferably from 1 to 3mm from the attachment surface.

According to a second aspect there is provided a preformed end piece for use in the manufacture of a container, wherein the end piece has an inlet, and an outlet for dispensing a product from the container and an intermediate portion extending from the inlet to the outlet,
wherein the outlet is narrower than the inlet, and wherein the inlet has a surface for the attachment of a container wall,
wherein the intermediate portion comprises an annular insert that extends across the intermediate portion and that is over-moulded with a polymeric material.

According to a third aspect, there is provided a container for holding a hair dye, the container comprising the end piece as described herein. The end piece is used to form the dispensing portion of the container. Preferably the container is in a form resembling a toothpaste tube, albeit that the total volume of the tube is preferably less than for a standard toothpaste tube, i.e. volume sufficient for 25 to 100ml of product.

The end piece of the present invention is particularly suitable for use with ABL materials to form containers. ABL laminate tube skirts have excellent chemical resistance properties and in particular excellent barrier properties thanks to the existence of a coherent, mainly pinhole free Al foil layer. This provides the ultimate physical barrier to diffusion of species such as oxygen or water vapour into the tube, or from the tube outwards. This can prevent, for example, oxidation of the product in the tube, or drying out of the product through water loss.

Advantageously, the laminate material (such as polyethylene) on the inside of the laminate can be melted to form a seal with the preformed end piece. The use of the annular insert, by arranging for overlap, allows for a substantially continuous metal barrier around the container.

According to a fourth aspect, there is provided a hair dye container as described herein and containing hair dye. Hair dyes are well known and the container should hold any suitable hair dye.

According to a fifth aspect, there is provided a toothpaste container as described herein and containing dentifrice. The design of the present end piece is particularly advantageous for holding air- and/or moisture-sensitive toothpaste compositions, or toothpaste formulations containing stannous fluoride. Stannous fluoride is well known to react with aluminium foil at any non-protected edges. Tooth pastes (dentifrice) are well known and the container should hold any suitable tooth paste.

According to a sixth aspect, there is provided a method of forming a container, the method comprising heat-sealing a container body (or skirt) to the end piece as described herein. Techniques for forming such skirts are well known in the art, for example EP0321172 discloses a technique for forming containers including toothpaste tubes.

According to a seventh aspect, there is provided the use of an over-moulded annular insert comprising a layer of metal foil as a barrier layer in a preformed container end piece.

The present invention will now be described further with reference to the accompanying drawings, provided by way of example, in which:
Figure 1 shows two views of a typical tube end piece. One view is from above and shows an optional spiral thread for the attachment of a cap or lid (not shown), and a shoulder upon which the walls of the tube are can be attached. The second view shows the underside of the same tube end piece.
Figure 2 shows an exemplary schematic of how a laminated web material can be configured with relation to a tube end piece when a tube is formed.
Figures 3A and 3B shows a cross-section through a pre-injected tube end piece direct from the mould and a cross-section through a pre-injected tube end piece with a skirt attached thereto.
Figures 4A and 4B show prior art tube end pieces formed using a direct injection technique.

The tube end piece (1) has a neck portion (5) and a shoulder portion (10). The neck portion (5) may have an optional spiral thread (15) for the attachment of a lid or cap in use (not shown). The neck portion (5) defines an outlet (20). The outer periphery of the outlet (20) provides a sealing surface (21) for the attachment of a seal (not shown). The sealing surface (21) is smooth and flat and free from irregularities (80). The outer periphery of the shoulder portion (10) defines an inlet (25). The outer surface of the shoulder portion (10) provides an attachment surface (30) for the attachment of a skirt (35).

The tube end piece (1) is able to form the end of the final tube through the shoulder portion (10). The shoulder portions (10) have an inner, product-facing side (40) and an outer consumer-facing side (45). The shoulder portion (10) of the end piece (1) is provided with a frustoconical barrier insert (50) formed from an ABL. The barrier insert (50) comprises a metal barrier layer (55) and laminate polyethylene layers (60). The barrier insert is embedded by the material, especially on the cut edges in order to protect the metal barrier layer (55), so as to form a part of the inner, product-facing side (40). As it is illustrated on the drawings, the inner, product-facing side (40) forms the interior surface of the end piece.

When forming a container tube from the tube end piece (1), the downward extending flange (65) on the outer surface of the shoulder portion (10) provides a surface upon which the walls of the tube (35) can be heat-sealed or otherwise adhered.

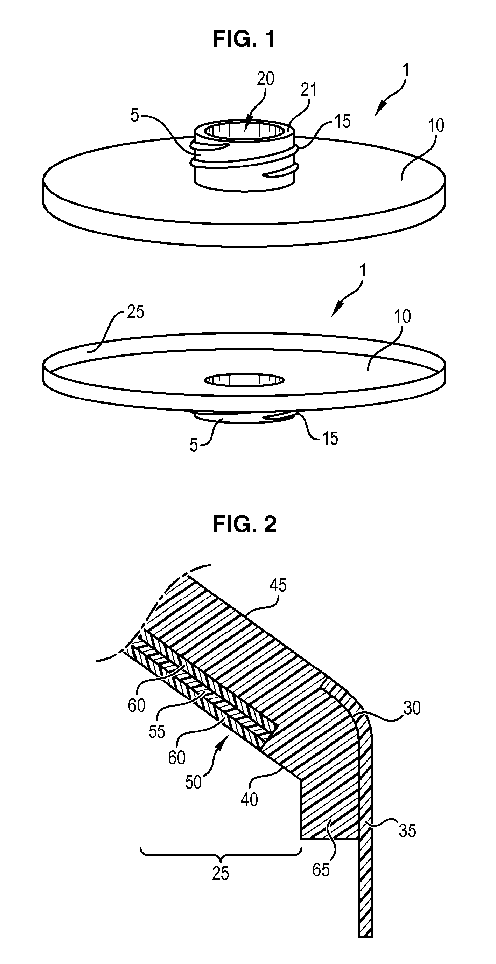

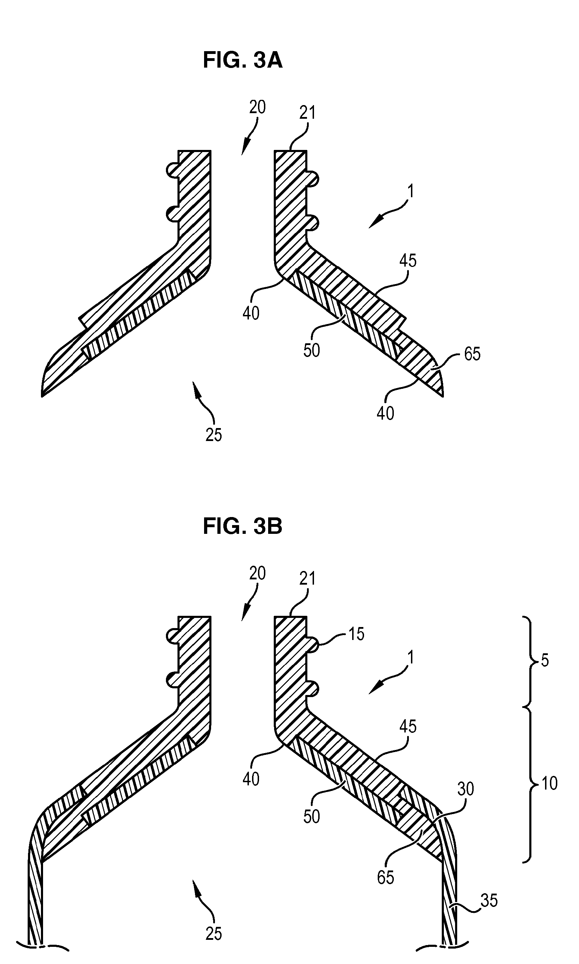

As shown in figure 2, the walls of the tube, which are preferably formed from an aluminium barrier laminate, may extend a distance across the shoulder (10) of the end piece (1). This may overlap (not shown in figure 2, see figure 3B) with the barrier insert (50). The greater the overlap, the greater the barrier protection, although the cost of materials increases. As shown in figure 2, the barrier insert (50) may have a laminate form. In this example, due to the overmoulding, the ends of a sandwiched aluminium layer are clearly embedded within the end piece (1) and protected from the product by polymeric shoulder material.

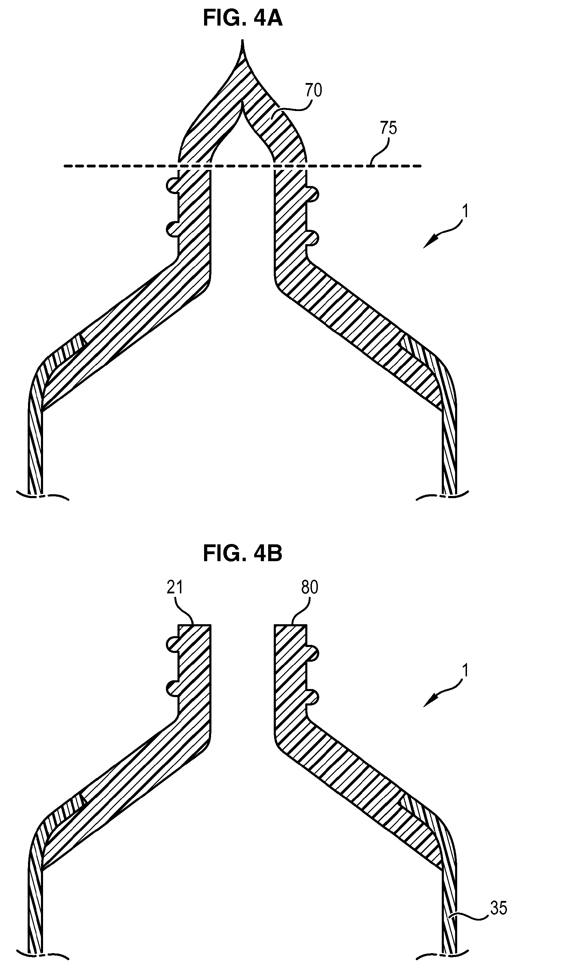

Figure 4 shows a tube end piece (1) manufactured by the direct injection method of the prior art. The sealing surface (21) is obtained by cutting a sprue (70) from the mouth of the tube. This leads to the presence of irregularities (80) in the form of surface roughness and or surface angles. The cutting line is shown by the dashed line (75).

Tubes of the present disclosure and comparative conventional laminated material tubes were made and tested. The presence of the annular insert was found to significantly reduce the oxidation of a hair dye product stored in the tube compared to tubes formed without the insert. Indeed, it was found that conventional tubes also allowed the product to dry out and this reduced the shelf life of the hair dye held therein.

The present inventors have provided an end piece that is ideally suited for use with "hard-to-hold" products. Firstly, by adopting a pre-formed end piece they have avoided the problems associated with direct injection to allow for the reliable application of a removable seal across the outlet of the tube. Secondly, by overmoulding a barrier insert to form the shoulder of the end piece they have reduced scalping and delamination of the end piece, as well as oxygen ingress and moisture loss. The use of the pre-formed end piece allows for easy preparation of a tube and the overlap of the barrier insert with the barrier present in an ABL tube wall. Thus, the tube for a hard-to-hold product has full protection from the product.

When introducing elements of the present disclosure or the preferred embodiments(s) thereof, the articles "a", "an", "the" and "said" are intended to mean that there are one or more of the elements. The terms "comprising", "including" and "having" are intended to be inclusive and mean that there may be additional elements other than the listed elements.

The foregoing detailed description has been provided by way of explanation and illustration, and is not intended to limit the scope of the appended claims. Many variations in the presently preferred embodiments illustrated herein will be apparent to one of ordinary skill in the art, and remain within the scope of the appended claims and their equivalents.

## Claims

1. A method for forming a preformed end piece for use in the manufacture of a container, wherein the end piece has an inlet and an outlet and an intermediate portion extending from the inlet to the outlet,
wherein the outlet is narrower than the inlet, and wherein the inlet has a surface for the attachment of a container wall,
the method comprising:
a) providing in a mould an annular insert comprising a layer of metal foil;
b) injecting a polymeric material into the mould and onto the annular insert to form the end piece, whereby the annular insert extends across the intermediate portion.

2. A method according to claim 1, wherein the intermediate portion has an inner surface which, in use, forms part of the internal surface of the container, and an outer surface which, in use, forms part of the external surface of the container, and wherein the injected polymeric material forms the outer surface side of the intermediate portion.

3. A method according to claim 1 or claim 2, wherein the annular insert contacts, in use, product held in the container.

4. A method according to any of the preceding claims, wherein the annular insert is planar or frustoconical.

5. A method according to any of the preceding claims, wherein the annular insert has an inner surface provided with one or more polyethylene layers thereon.

6. A method according to any of the preceding claims, wherein the layer of metal foil of the annular insert is provided sandwiched between two or more polyethylene layers.

7. A method according to any of the preceding claims, wherein:
(i) the metal foil is aluminium; and/or
(ii) the metal foil has a thickness of from 6 microns to 20 microns; and/or
(iii) wherein the polyethylene layers are from 30 to 90 microns thick; and/or
(iv) wherein the polyethylene layers are each adhered with a tie layer.

8. A method according to any of the preceding claims, wherein the outlet of the end piece has an attachment surface for the attachment of a seal for closing the outlet, and wherein the polymeric material is injected into the mould in proximity to, but not on the attachment surface of the outlet of the end piece.

9. A preformed end piece formed by the method according to one of the preceding claims, and for use in the manufacture of a container, wherein the end piece has an inlet, and an outlet for dispensing a product from the container and an intermediate portion extending from the inlet to the outlet,
wherein the outlet is narrower than the inlet, and wherein the inlet has a surface for the attachment of a container wall,
wherein the intermediate portion comprises an annular insert that extends across the intermediate portion and that is over-moulded with a polymeric material.

10. A container for holding a hair dye, the container comprising the end piece as defined in claim 9.

11. A hair dye container according to claim 10 and containing hair dye.

12. A toothpaste container according to claim 10 and containing dentifrice.

13. A method of forming a container, the method comprising heat-sealing a container body to the end piece as defined in claim 9.

14. The use of an over-moulded annular insert comprising a layer of metal foil as a barrier layer in a preformed container end piece.
